Europäisches Patentamt

European Patent Office

Office européen des brevets

(11) Publication number: **0 121 987**
**B1**

# EUROPEAN PATENT SPECIFICATION

(45) Date of publication of patent specification: 02.05.90

(51) Int. Cl.⁵: **G 02 B 6/38**

(21) Application number: 84300770.9

(22) Date of filing: 07.02.84

(54) Article for and method of joining optical fibres.

(30) Priority: 08.02.83 US 464805

(43) Date of publication of application:
17.10.84 Bulletin 84/42

(45) Publication of the grant of the patent:
02.05.90 Bulletin 90/18

(84) Designated Contracting States:
AT BE CH DE FR IT LI NL SE

(56) References cited:
DE-A-2 657 687
DE-A-2 721 347
DE-A-2 750 089
FR-A-2 412 863
GB-A-1 447 469
GB-A-2 100 463

Patent Abstracts of Japan vol. 6, no. 116, 29
June 1982 & JP-A-57-45511
Patent Abstracts of Japan, vol. 5, no. 191, 5
December 1981 & JP-A-56-114914

(73) Proprietor: RAYCHEM CORPORATION (a
Delaware corporation)
300 Constitution Drive
Menlo Park, California 94025 (US)

(72) Inventor: Arrington, John Preston
1360, Oakhurst Avenue
San Carlos California 94070 (US)
Inventor: Shen, Nelson Mu-Ching
6480, Century Drive
San Jose California 95129 (US)

(74) Representative: Jones, David Colin et al
Raychem Limited Intellectual Property Law
Department Faraday Road Dorcan
Swindon, Wiltshire SN3 5HH (GB)

Courier Press, Leamington Spa, England.

## Description

This invention relates to the joining of optical fibers, and particularly though not exclusively to the adhesive joining of optical fibers which have been optically aligned.

In UK Patent Application Publication No. 2100463, the disclosure of which is incorporated herein by reference, there is disclosed a technique for the adhesive joining of optical fibers. The fibers are butted end-to-end within a tube containing index-matching adhesive, optically aligned by measuring the light intensity passing from one fiber to the other and maximizing that intensity, and the adhesive is then caused to harden. A preferred adhesive is a photopolymerizable adhesive, i.e. one that will harden on exposure to ultraviolet light.

It has been discovered, however, that shrinkage and flow of the adhesive as it sets tend to cause a loss of orientation of the fiber ends with respect to each other, which may result in an unacceptably high loss at the joint. (Fusion joining can produce losses as low as less than 0.1 dB, and for telecommunication fibers a loss less than 0.3 dB and preferably as low as 0.1 dB is considered desirable).

This adverse effect is a consequence of the adhesive being in a tube: polymerization of a drop of adhesive between two fiber ends but otherwise unconstrained does not cause a problem. However, in a tube, the surface interface between the adhesive and the tube inner wall restricts the freedom of the adhesive to shrink without coming under stress. Eventually the stress is relieved by cracking or void formation in the adhesive, flow of the adhesive, or separation at an adhesive surface.

Because the fibers are flexible, it is not believed possible to rely on simply holding the fibers to prevent their movement: although the parts which are held remain still, the forces exerted on the ends by the shrinking adhesive are quite sufficient to cause relative movement.

One solution that has been proposed is to coat the inner wall of the tube with a release agent, or make at least the inner surface of the tube itself of an inherently releasing material, so that any separation which occurs takes place at the adhesive-tube interface.

It has been proposed in British Published Patent Application No. 2,039,379A, the disclosure of which is incorporated herein by reference, to "zone cure" a photopolymerizable adhesive about an optical fiber which is to be aligned with a lens. This zone curing comprises first curing the adhesive adjacent the lens and the end of the fibre, and then curing the remaining adhesive by gradually exposing it to light. The technique proposed in that application relies on the ability to symmetrically cure the adhesive about the fibre end to avoid loss of alignment.

U.S. Patent No. 4,201,618 (Lewis) discloses an apparatus designed to achieve the symmetric curing of a photopolymerizable adhesive used to join the ends of optical fibres.

The adhesive is contemplated as being unconstrained (not in a tube), and a uniformly stressed bonded connection is said to be formed.

FR 2412863 describes an optical fiber coupling, wherein the fibre ends are held in axial alignment by being fitted into opposite ends of a rigid sleeve. The coupling is a tube having flared ends so as to be large enough to permit entry of the cladded fibres, while its central section is a close fit with the fibre claddings in order to align the fibres.

It is an object of the present invention to provide an article and a method whereby an improved joint between the ends of two optical fibres may be obtained.

In accordance with one aspect of the present invention there is provided a method of adhesively joining two optical fibres each of which comprises a core and a cladding, which comprises:

(a) introducing the ends of the fibres into a tube-like container having an open or closed, circular or other shaped, cross-section; first and second ends for receiving the fibres; and an intermediate region connecting the ends; the intermediate region having an internal cross-section smaller than the internal cross-section of the ends, and containing a hardenable adhesive;

wherein the intermediate region has an internal diameter that is arranged to be at least 1.2 times the external diameter of the cladding of the fibre;

(b) arranging the ends of the fibre within the intermediate region of the container such that their cores are adjacent one another and aligned; and

(c) causing the adhesive to harden, thereby joining the fibres.

In accordance with another aspect of the present invention, there is provided an article for joining together ends of two optical fibres each of which comprises a core and a cladding, the article comprising:

(a) a tube-like container having an open or closed, circular or other shaped cross-section; first and second ends for receiving the fibres; and an intermediate region connecting the ends; the intermediate region having an internal cross-section smaller than the internal cross-section of the ends; and

(b) a hardenable adhesive disposed within the intermediate region, wherein the intermediate region has an internal diameter that is arranged to be at least 1.2 times the external diameter of the cladding of the fibres to be joined to allow the fibre ends to be moved relative to one another within the adhesive and the intermediate region of the container so that the cores of the fibres may be adjacent one another and mutually aligned;

the inner surface of the container being (i) coated with a release agent which lowers adhesion between the surface on which it is coated and another material with which that surface comes into contact so that the other surface may separate from the surface; and/or (ii) is composed of an inherently releasing material having an adhesive bond strength between it and the adhesive which is less than the cohesive bond strength of the adhesive.

In accordance with a third aspect of the present invention is provided a method of adhesively joining two optical fibres each of which comprises a core and a cladding, which comprises:

(a) introducing the ends of the fibres into a tube-like container having an open or closed, circular or other shaped cross-section; first and second ends for receiving the fibres; and an intermediate region connecting the ends, the intermediate region having an internal cross-section smaller than the cross-section of the ends, and containing a hardenable adhesive;

(b) arranging the ends of the fibres within the intermediate region of the container such that their cores are adjacent one another and aligned; and

(c) causing the adhesive immediately adjacent the fibres ends to harden, and subsequently causing the remainder of the adhesive to harden, thereby joining the fibres.

The intermediate region of the container may conveniently be located centrally thereof.

The alignment technique employed in the method of the invention may be, for example, optical alignment, by which is meant the use of the technique disclosed in U.K. Patent Application Publication No. 2100463; or visual alignment, where the positions of the fiber ends are observed with a microscope and moved into axially aligned, abutting relationship.

The preferred technique for joining the aligned fibers is by supplying a hardenable fluid, index-matching adhesive to the ends of the aligned fibers. Preferably the adhesive is polymerizable (this term being used to include adhesives which can be further polymerized or cross-linked). The adhesive may be self-setting (e.g. a two-component epoxy or cyanoacrylate adhesive) but is preferably one which polymerizes only when exposed to selected treatment after the fibers have been aligned. Particularly useful are photopolymerizable adhesives which can be cured by exposure to UV light, for example a photo-initiated urethane/acrylate adhesive. Other hardenable adhesives can be used, however. The hardened adhesive will be transparent to radiation of at least one of the wavelengths used as a signal in optical fibers (typically 810—860, 1280—1320 and 1450—1550 nanometers).

Where the fibers to be joined comprise both a core and a cladding up to their ends which are to be joined, the hardened adhesive will usually have a refractive index which is not substantially less than that of the core, i.e. at least 1.4, preferably at least 1.45. However, where plastic-clad fibers are to be joined and the optical cladding is stripped back from the ends, the refractive index of the adhesive will preferably be identical or very close to that of the cladding.

The article may comprise means for supplying adhesive to the container.

Preferably the article of the invention comprises a quantity of index-matching adhesive.

The index-matching adhesive may lie within the container, and may provide the only content of the container. The adhesive may be retained within the container by surface tension forces.

The container is preferably a tube having a circular cross-section, but it can also be a tube having a different closed cross-section, or an open trough or another form of container which will contain and retain the adhesive; all such containers are included by the term "generally tubular container" as used herein. If the container is stored with the adhesive therein, it can if desired be fitted with removable end caps which seal its open ends thus keeping the adhesive clean and, if necessary, preventing it from leaking out of the container.

The smaller intermediate cross-section of the article of the invention offers two particular advantages. First, it reduces the volume of adhesive which is hardened near the fiber ends, thereby lessening the movement caused by polymer shrinkage and flow. Second, when the fibers are stripped of their buffers or claddings for a part of their length, it is desirable that the buffer extend into the adhesive to obtain a joint of maximum tensile strength between the fibers. However, it is also desirable that the fiber ends lie close to, but not touching, for example, 10 to 50 microns from, the inner surface of the container near the means for causing the adhesive to harden, to ensure that the adhesive hardens near the fiber ends first, locking them into alignment before the rest of the adhesive hardens. A container having a smaller central cross-section accommodates these apparently conflicting requirements.

The container should be such as to allow adequate movement of the fibres during the alignment process. To this end it is at least 1.2 times, preferably at least 1.6 times, especially 3 times the external diameter of the fiber. Thus, for example fibers having a 125 micron outer diameter (core plus cladding) and 250 micron diameter buffer may conveniently be joined within a container having an internal diameter of 500 microns in the central region and 1000 microns at the ends. The internal cross-section of the central region is preferably 250 to 750 microns, especially about 400 to 600 microns. The internal cross-section of the ends is preferably from 1.5 to 10 times the internal cross-section of the central region, e.g. 500 to 3000 microns, preferably 750 to 2000 microns.

The length of the smaller intermediate region should be sufficient to enable joining of the fiber ends, e.g. at least 1 mm, but is preferably less than about 5 mm, especially in the case of a container for joining stripped fibers. The length of the container overall should be sufficient to allow a strong adhesive joint to be formed, for example at least 5 mm, and is preferably less than about 25 mm, as an excessively long tube makes alignment of the fiber ends difficult. A preferred length range is 10 to 20 mm.

The container may be composed of, for example, quartz, glass, metal, or a polymeric composition, provided that it permits (and is not damaged by) the desired process for hardening the adhesive. When the preferred photopolymerizable adhesive is used, the container should be UV-transparent. The inner surface of the container is preferably coated with a release agent, and/or the material of the surface is inherently releasing, as has been discussed previously.

The hardenable adhesive used preferably has a viscosity such that it is retained in the container at 23°C with the container horizontal, and more preferably under all other conditions likely to be encountered before the adhesive is hardened. On the other hand, its viscosity should not be such that it is difficult to insert and move the optical fibers under the joining conditions. We prefer to use an adhesive having a viscosity of 750 to 3000 centipoise, particularly 1200 to 2500 centipoise, e.g. about 2200 centipoise, (viscosities referred to herein are measured at 23°C using a Model HBT Brookfield Viscometer, Spindle No. SC4-27 rotating at 100 rpm).

The adhesive may alternatively be retained in, for example, a small polymeric bulb attached (or capable of attachment) to one of the ends of the container, and be dispensed into the container when the container is to be used. This offers particular advantage if a two-component adhesive is used, since a two-part bulb may be employed.

An article for and method of joining two optical fibres, each in accordance with the present invention, will now be described, by way of example, with reference to the accompanying drawing, in which;

Figure 1 shows the article in longitudinal section; and

Figure 2 shows the article of Figure 1 in use to make the joint.

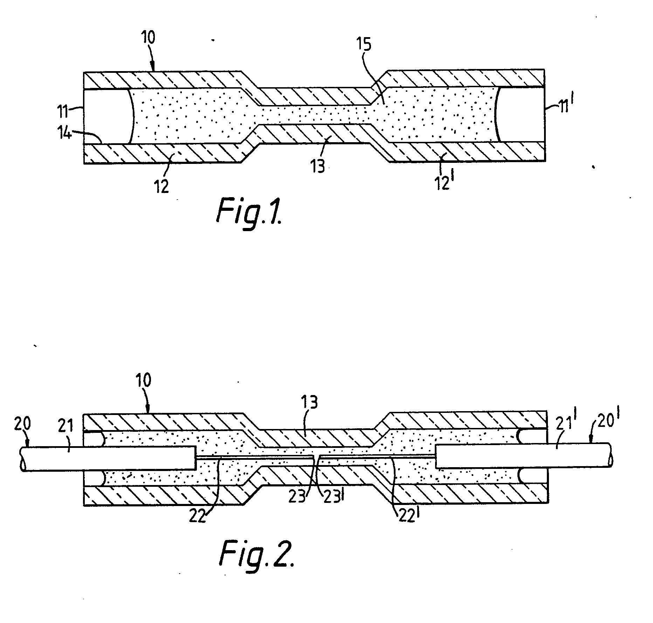

Referring to Figure 1, the container of the article, shown generally at 10, has two open ends 11 and 11' and end regions 12 and 12' which have a greater internal cross-section than a central region 13. The inner surface 14 of the container may comprise a release agent and/or the material comprising the container itself may be self-releasing. A quantity of index-matching adhesive 15 is shown within the container.

Figure 2 illustrates the container of Figure 1 as used to make an adhesive joint between two optical fibers. The buffers 21 and 21' of two optical fibers, shown generally at 20 and 20', have been cut back, exposing the glass fibers 22 and 22'. The fibers are inserted into the container so that the ends 23 and 23' of the fibers are almost abutting within the central region 13 of the container 10. The fibers are then aligned (by means not illustrated here), and the index-matching adhesive 15 is caused to harden to make the joint.

Example

An apparatus generally as described in U.K. Patent Application Publication No. 2100463 was used to join two identical optical fibers. The fibers (which are available from Corning Glass) consisted of a glass core of diameter 50 microns, a glass cladding of outside diameter 125 microns, and a polyacrylate buffer of outer diameter 250 microns. The buffer was stripped from the fiber ends and the stripped fiber ends cleaved to provide clean end surfaces about 3 mm from the end of the buffer. The fibers were then inserted into an article according to this invention. The article, made of poly (methyl pentene) had an overall length of 12.7 mm, and a narrow central region length of 3.2 mm. The inner diameter of the end regions was 1500 microns and of the central region was 500 microns, with the wall thickness being 500 microns. The article contained a UV-polymerizable adhesive having a refractive index (when cured) of about 1.49, which adhesive comprised a mixture of about 3 parts by weight of trimethylolpropane triacrylate and 1 part by weight of a urethane/acrylate oligomer (Uvethane 788 from Thiokol) with a small quantity of a photoinitiator.

The adhesive had a viscosity (uncured) of about 2200 centipoise.

The fibers were inserted into the adhesive-filled container such that the stripped ends almost touched at the center of the tube near the wall nearest a UV lamp, and were then precisely aligned. The adhesive was then cured in a two-stage zone cure; in which (1) a length of 1 mm about the ends of the fibres was exposed to the lamp, and (2) the rest of the container was exposed.

An excellent splice could be reproducibly prepared with a loss less than 0.1 dB.

**Claims**

1. A method of adhesively joining two optical fibres (20) each of which comprises a core (22) and a cladding (21), which comprises:

(a) introducing the ends (23) of the fibres (20) into a tube-like container having an open or closed, circular or other shaped, cross-section; first and second ends (11) for receiving the fibres (20); and an intermediate region (13) having an internal cross-section smaller than the internal cross-section of the ends (11), and containing a hardenable adhesive (15);

wherein the intermediate region has an internal diameter that is arranged to be at least 1.2 times the external diameter of the cladding of the fibres;

(b) arranging the ends (23) of the fibres (20) within the intermediate region (13) of the container such that their cores (22) are adjacent one another and aligned; and

(c) causing the adhesive (15) to harden, thereby joining the fibres (20).

2. A method according to claim 1, wherein the adhesive (15) is photopolymerizable and step (c) comprises exposing the adhesive (15) to ultraviolet light.

3. A method according to claim 1 or 2, wherein step (c) comprises: (i) causing the adhesive (15) immediately adjacent to fiber ends (23) to harden; and (ii) subsequently causing the remainder of the adhesive to harden.

4. A method according to any of claims 1—3, wherein the inner surface of the container is

(a) coated with a release agent which lowers the adhesion between the surface on which it is coated and another material within the container with which that surface comes into contact so that the other surface may separate from the surface; and/or

(b) is composed of an inherently releasing material having an adhesive bond strength between it and the adhesive which is less than the cohesive bond strength of the adhesive.

5. A method according to any preceding claim, wherein the smallest internal cross-sectional dimension of the intermediate region is between 250 and 750 microns.

6. A method according to any preceding claim, wherein the ratio of the smallest internal cross-section to the largest internal cross-section is between 1:1.5 and 1:10.

7. A method according to any preceding claim, wherein the container has a smallest internal radius of curvature of at least 125 microns.

8. A method of adhesively joining two optical fibres (20) each of which comprises a core (22) and a cladding (21), which comprises:

(a) introducing the ends (23) of the fibres (20) into tube-like container having an open or closed, circular or other shaped, cross-section; first and second ends (11) for receiving the fibres; and an intermediate region (13) connecting the ends, the intermediate region (13) having an internal cross-section smaller than the cross-section of the end (11), and containing a hardenable adhesive (15);

(b) arranging the ends (23) of the fibres (20) within the intermediate region (13) of the container such that their cores (22) are adjacent one another and aligned; and

(c) causing the adhesive immediately adjacent the fibres ends to harden, and subsequently causing the remainder of the adhesive to harden, thereby joining the fibres.

9. An article (1) for joining together ends of two optical fibres (20) each of which comprises a core (22) and a cladding (21), the article comprising:

(a) a tube-like container having an open or closed, circular or other shaped cross-section; first and second ends (11) for receiving the fibres (20); and an intermediate region (13) connecting the ends (11); the intermediate region (13) having an internal cross-section smaller than the internal cross-section of the ends (11); and

(b) a hardenable adhesive (15) disposed within the intermediate region (13), wherein the intermediate region (13) has an internal diameter that is arranged to be at least 1.2 times the external diameter of the cladding (21) of the fibres (20) to be joined to allow the fibre ends (23) to be moved relative to one another within the adhesive (15) and the intermediate region (13) of the container so that the cores (22) of the fibres may be adjacent one another and mutually aligned; the inner surface of the container being

(i) coated with a release agent which lowers the adhesion between the surface on which it is coated and another material with which that surface comes into contact so that the other surface may separate from the surface; and/or

(ii) is composed of an inherently releasing material having an adhesive bond strength between it and the adhesive which is less than the cohesive bond strength of the adhesive.

**Patentansprüche**

1. Verfahren zum haftenden Verbinden zweier Lichtleiter (20), die jeweils eine Seele (22) und einen Mantel (21) aufweisen, umfassend:

(a) Einführen der Enden (23) der Lichtleiter (20) in einen rohrförmigen Behälter, der einen offenen oder geschlossenen, kreisförmigen oder anders geformten Querschnitt, ein erstes und zweites Ende (11) zur Aufnahme der Lichtleiter (20) und einen Zwischenbereich (13), dessen Innenquerschnitt kleiner ist als der Innenquerschnitt der Enden (11), aufweist und einen härtbaren Kleber (15) enthält;

wobei der Zwischenbereich einen Innendurchmesser hat, der so ausgelegt ist, daß er wenigstens das 1,2fache des Außendurchmessers des Mantels der Lichtleiter beträgt;

(b) Anordnen der Enden (23) der Lichtleiter (20) im Zwischenbereich (13) des Behälters derart, daß ihre Seelen (22) aneinandergrenzen und zueinander ausgerichtet sind; und

(c) Herbeiführen des Härtens des Klebers (15) unter Verbinden der Lichtleiter (20).

2. Verfahren nach Anspruch 1, wobei der Kleber (15) photopolymerisierbar ist und Schritt (c) umfaßt, daß der Kleber (15) ultraviolettem Licht ausgesetzt wird.

3. Verfahren nach Anspruch 1 oder 2, wobei Schritt (c) umfaßt: (i) Herbeiführen des Härtens des direkt an die Lichtleiterenden (23) angrenzenden Klebers (15); und (ii) anschließendes Herbeiführen des Härtens des restlichen Klebers.

4. Verfahren nach einem der Ansprüche 1—3, wobei die Innenfläche des Behälters

(a) mit einem Trennmittel beschichtet ist, das die Haftung zwischen der Oberfläche, auf die es aufgebracht ist, und einem anderen Material im Behälter, mit dem diese Oberfläche in Berührung kommt, herabsetzt, so daß sich die andere Oberfläche von der Oberfläche trennen kann; und/oder

(b) aus einem Material mit inhärenter Trenneigenschaft besteht, wobei die Klebehaftfestigkeit zwischen diesem Material und dem Kleber geringer ist als die Kohäsionshaftfestigkeit des Klebers.

5. Verfahren nach einem der vorhergehenden Ansprüche, wobei der kleinste Innenquerschnitt des Zwischenbereichs zwischen 250 und 750 µm beträgt.

6. Verfahren nach einem der vorhergehenden Ansprüche, wobei das Verhältnis des kleinsten Innenquerschnitts zum größten Innenquerschnitt zwischen 1:1,5 und 1:10 liegt.

7. Verfahren nach einem der vorhergehenden Ansprüche, wobei der Behälter einen kleinsten Innenkrümmungsradius von wenigstens 125 µm hat.

8. Verfahren zum haftenden Verbinden zweier Lichtleiter (20), die jeweils eine Seele (22) und einen Mantel (21) aufweisen, umfassend:

(a) Einführen der Enden (23) der Lichtleiter (20) in einen rohrförmigen Behälter, der einen offenen oder geschlossenen, kreisförmigen oder anders geformten Querschnitt, ein erstes und zweites Ende (11) zur Aufnahme der Lichtleiter und einen die Enden verbindenden Zwischenbereich (13), dessen Innenquerschnitt kleiner ist als der Querschnitt des Endes (11), aufweist und einen härtbaren Kleber (15) enthält;

(b) Anordnen der Enden (23) der Lichtleiter (20) im Zwischenbereich (13) des Behälters derart, daß ihre Seelen aneinandergrenzen und zueinander ausgerichtet sind; und

(c) Herbeiführen des Härtens des direkt an die Lichtleiterenden angrenzenden Klebers und anschließendes Herbeiführen des Härtens des restlichen Klebers unter Verbinden der Lichtleiter.

9. Gegenstand (1) zum Verbinden der Enden zweier Lichtleiter (20), die jeweils eine Seele (22) und einen Mantel (21) aufweisen, wobei der Gegenstand umfaßt:

(a) einen rohrförmigen Behälter, der einen offenen oder geschlossenen, kreisförmigen oder anders geformten Querschnitt, ein erstes und zweites Ende (11) zur Aufnahme der Lichtleiter (20) und einen die Enden (11) verbindenden Zwischenbereich (13) aufweist, wobei der Zwischenbereich (13) einen Innenquerschnitt hat, der kleiner ist als der Innenquerschnitt der Enden (11); und

(b) einen im Zwischenbereich (13) vorgesehenen härtbaren Kleber (15), wobei der Zwischenbereich (13) einen Innendurchmesser hat, der so ausgelegt ist, daß er wenigstens das 1,2fache des Außendurchmessers des Mantels (21) der zu verbindenden Lichtleiter (20) beträgt, so daß die Lichtleiterenden (23) im Kleber (15) und im Zwischenbereich (13) des Behälters relativ zueinander bewegbar sind, so daß die Seelen (22) der Lichtleiter aneinandergrenzen und zueinander ausgerichtet werden können; wobei die Innenfläche des Behälters

(i) mit einem Trennmittel beschichtet ist, das die Haftung zwischen der Oberfläche, auf die es aufgebracht ist, und einem anderen Material, mit dem diese Oberfläche in Berührung kommt, herabsetzt, so daß sich die andere Oberfläche von der Oberfläche trennen kann; und/oder

(ii) aus einem Material mit inhärenter Trenneigenschaft besteht, wobei die Klebehaftfestigkeit zwischen diesem Material und dem Kleber geringer ist als die Kohäsionshaftfestigkeit des Klebers.

**Revendications**

1. Procédé pour la jonction adhésive de deux fibres optiques (20), chaque fibre comprenant un coeur (22) et une gaine (21), qui consiste:

(a) à introduire les extrémités (23) des fibres (20) dans un récipient analogue à un tube ayant une section transversale ouverte ou fermée, de forme circulaire ou d'une autre forme; des première et seconde extrémités (11) destinées à recevoir les fibres (20); et une région intermédiaire (13) ayant une section transversale intérieure plus petite que la section transversale intérieure des extrémités (11) et contenant un adhésif durcissable (15);

la région intermédiaire ayant un diamètre intérieur qui est conçu de manière à être égal à au moins 1,2 fois le diamètre extérieur de la gaine des fibres;

(b) à disposer les extrémités (23) des fibres (20) à l'intérieur de la région intermédiaire (13) du récipient, de sorte que leurs coeurs (22) soient adjacents l'un à l'autre et alignés; et

(c) à provoquer le durcissement de l'adhésif (15), ce qui permet la jonction des fibres (20).

2. Procédé suivant la revendication 1, dans lequel l'adhésif (15) est photopolymérisable et l'étape (c) consiste à exposer l'adhésif (15) à une lumière ultraviolette.

3. Procédé suivant la revendication 1 ou 2, dans lequel l'étape (c) consiste: (i) à provoquer le durcissement de l'adhésif (15) immédiatement adjacent aux extrémités (23) des fibres; et (ii) à provoquer ensuite le durcissement du reste de l'adhésif.

4. Procédé suivant l'une quelconque des revendications 1 à 3, dans lequel la surface intérieure du récipient est

(a) revêtue d'un agent de démoulage qui diminue l'adhérence entre la surface revêtue avec cet agent et une autre matière à l'intérieur du récipient avec laquelle cette surface vient en contact, de sorte que l'autre surface puisse se séparer de la surface; et/ou

(b) constituée d'une matière présentant en elle-même des propriétés de démoulage, ayant une force de liaison adhésive entre elle et l'adhésif qui est inférieure à la force de liaison cohésive de l'adhésif.

5. Procédé suivant l'une quelconque des revendications précédentes, dans lequel la section transversale intérieure la plus petite de la région intermédiaire est comprise dans l'intervalle de 250 à 750 micromètres.

6. Procédé suivant l'une quelconque des revendications précédentes, dans lequel le rapport de la section transversale intérieure la plus petite à la section transversale intérieure la plus grande est compris dans l'intervalle de 1:1,5 à 1:10.

7. Procédé suivant l'une quelconque des revendications précédentes, dans lequel le plus petit rayon intérieur de courbure du récipient est égal à au moins 125 micromètres.

8. Procédé pour la jonction adhésive de deux fibres optiques (20), chaque fibre comprenant un coeur (22) et une gaine (21), qui consiste:

(a) à introduire les extrémités (23) des fibres (20) dans un récipient analogue à un tube ayant une section transversale ouverte ou fermée, de forme circulaire ou d'une autre forme; des première et seconde extrémités (11) destinées à recevoir les fibres; et une région intermédiaire (13) connectant les extrémités, la région intermédiaire (13) ayant une section transversale intérieure plus petite que la section transversale de l'extrémité (11) et contenant un adhésif durcissable (15);

(b) à disposer les extrémités (23) des fibres (20) à l'intérieur de la région intermédiaire (13) du récipient, de sorte que leurs coeurs (22) soient adjacents l'un à l'autre et alignés; et

(c) à provoquer le durcissement de l'adhésif immédiatement adjacent aux extrémités des fibres, puis à provoquer le durcissement du reste de l'adhésif, ce qui permet la jonction des fibres.

9. Article (1) pour la jonction l'une à l'autre des extrémités de deux fibres optiques (20), chaque fibre comprenant un coeur (22) et une gaine (21), l'article comprenant:

(a) un récipient analogue à un tube ayant une section transversale ouverte ou fermée, de forme circulaire ou d'une autre forme; des première et seconde extrémités (11) destinées à recevoir les fibres (20); et une région intermédiaire (13) connectant les extrémités (11); la région intermédiaire (13) ayant une section transversale intérieure plus petite que la section transversale intérieure des extrémités (11); et

(b) un adhésif durcissable (15) placé à l'intérieur de la région intermédiaire (13), la région intermédiaire (13) ayant un diamètre intérieur qui est conçu de manière à être égal à au moins 1,2 fois le diamètre extérieur de la gaine (21) des fibres (20) à joindre de manière à permettre aux extrémités (23) des fibres de se déplacer l'une par rapport à l'autre à l'intérieur de l'adhésif (15) et de la région intermédiaire (13) du récipient, de sorte que les coeurs (22) des fibres puissent être adjacents l'un à l'autre et mutuellement alignés; la surface intérieure du récipient étant

(i) revêtue d'un agent de démoulage qui diminue l'adhérence entre la surface revêtue avec cet agent et une autre matière avec laquelle cette surface vient en contact, de sorte que l'autre surface puisse se séparer de la surface; et/ou

(ii) est constituée d'une matière présentant en elle-même des propriétés de démoulage, ayant une force de liaison adhésive entre elle et l'adhésif qui est inférieure à la force de liaison cohésive de l'adhésif.

Fig.1.

Fig.2.